# DEMANDE DE BREVET EUROPEEN

(11) **EP 4 592 125 A1**
(43) Date de publication de la demande: **30.07.2025**
(21) Numéro de dépôt: 25152899.8
(22) Date de dépôt: 20.01.2025
(51) Int. Cl.: B60K 37/10, B60K 37/20

(54) **ÉLÉMENT DE PLANCHE DE BORD AVEC ZONE FRANGIBLE**

(30) Priorité: 24.01.2024 FR 2400677
(71) Demandeur: Stellantis Auto SAS, 78300 Poissy (FR)
(72) Inventeur: CARECCHIO, DAVID, 25490 FESCHES LE CHATEL (FR); LE NORCY, YOHANN, 90400 DANJOUTIN (FR)
(74) Mandataire: BCIP

(57) **Abrégé**

L'invention concerne un élément (1) de planche de bord conçu pour être fixé à un véhicule pour former au moins une partie d'une planche de bord (2) du véhicule, l'élément (1) de planche de bord comportant au moins une portion d'impact (5) chacune conçue pour être disposée en regard d'un genou d'un conducteur assis en position de conduite dans le véhicule équipé de l'élément (1) de planche de bord, l'élément (1) de planche de bord comportant au moins une zone frangible (6) conçue pour se rompre et permettre l'enfoncement d'au moins un genou du conducteur dans une portion d'impact (5) lors d'un impact du genou sur la portion d'impact (5) sous l'effet d'un choc subi par le véhicule.

## Description

Le domaine technique concerne les éléments de planche de bord présentant une zone frangible, les planches de bord comportant un tel élément de planche de bord et les véhicules équipés d'une telle planche de bord.

En matière de sécurité routière, les constructeurs d'automobiles doivent faire face à au moins trois préoccupations majeures qui définissent des contraintes à prendre en compte lors du développement de nouveaux véhicules.

En premier lieu, les véhicules doivent assurer la sécurité des passagers lors d'une collision quelle que soit la vitesse. Par ailleurs les constructeurs d'automobiles doivent s'efforcer de maitriser les coûts de réparation des véhicules lorsqu'ils subissent des chocs urbains, dénommés chocs réparabilité, c'est-à-dire des chocs subis à de faibles vitesses de l'ordre de 15 à 20 kilomètres par heure.

Enfin, une troisième préoccupation consiste à assurer la sécurité des autres usagers de la route, notamment les plus vulnérables tels que les piétons.

Le comportement des véhicules automobiles dans ces trois situations est réglementé et testé en mettant en oeuvre des procédures de tests normalisées. Les exigences en termes de résultats à ces tests sont toujours plus nombreuses et plus difficiles à satisfaire et obligent les constructeurs d'automobiles à innover constamment.

Les procédures normalisées sont, par exemple, décrites par l'organisme international Euro NCAP.

Dans ce contexte, lors d'un choc frontal, les blessures infligées aux conducteurs sont en partie provoquées par un impact des jambes et/ou des genoux du conducteur avec les éléments d'habitacle situés devant lui, sous le volant. En effet, en cas de choc frontal, les genoux viennent fréquemment heurter la planche de bord. Afin d'éviter cela, certains véhicules sont équipés de coussins gonflables conçus pour se gonfler et protéger les jambes du conducteur lors d'un choc subi par le véhicule. Cependant, cette solution s'avère très onéreuse.

Ainsi, il existe un besoin d'une solution économique, dépourvue de coussin gonflable, permettant de protéger les conducteurs d'un véhicule contre les blessures infligées aux jambes par un impact avec les éléments de l'habitacle.

La présente invention a pour objet de pallier les problèmes exposés précédemment. Dans ce contexte technique, un but de la présente invention est de fournir un élément de planche de bord permettant d'éviter des blessures provoquées par un impact d'un genou contre l'élément de planche de bord, en cas de choc subi par le véhicule équipé de l'élément de planche de bord.

A cet effet, la présente invention se rapporte à un élément de planche de bord conçu pour être fixé à un véhicule pour former au moins une partie d'une planche de bord du véhicule, l'élément de planche de bord comportant au moins une portion d'impact chacune conçue pour être disposée en regard d'un genou d'un conducteur assis en position de conduite dans le véhicule équipé de l'élément de planche de bord, l'élément de planche de bord comportant au moins une zone frangible conçue pour se rompre et permettre l'enfoncement d'au moins un genou du conducteur dans une portion d'impact lors d'un impact du genou sur la portion d'impact sous l'effet d'un choc subi par le véhicule.

L'invention concerne également une planche de bord comportant au moins un élément de planche de bord selon l'invention, conçue pour être installée sur un véhicule de sorte que chaque portion d'impact est disposée en regard d'au moins un genou d'un conducteur du véhicule assis en position de conduite et pour permettre l'enfoncement dans la portion d'impact d'au moins un genou du conducteur, assis en position de conduite du véhicule équipé de la planche de bord, par rupture de la zone frangible lors de l'impact d'un genou sur la portion d'impact sous l'effet d'un choc subi par le véhicule.

L'invention concerne enfin un véhicule automobile comprenant une planche de bord selon l'invention.

Ainsi, l'élément de planche de bord selon l'invention permet de former une planche de bord selon l'invention qui protège le conducteur du véhicule contre les blessures infligées aux genoux et/ou aux jambes du conducteur en cas de choc, notamment de choc frontal. En effet, grâce à la zone frangible, un impact d'au moins un genou sur la portion d'impact, consécutif à un choc subi par le véhicule, provoque une rupture de la zone frangible, permettant l'enfoncement du genou dans l'élément de planche de bord, qui s'efface sans blesser le conducteur. Ainsi, l'élément de planche de bord permet de protéger le conducteur en cas de choc subi par le véhicule sans nécessiter de recourir à un coussin gonflable très onéreux.

Selon un mode de réalisation de l'invention, l'élément de planche de bord est un insert de planche de bord formant en partie la structure de la planche de bord.

Selon une possibilité, chaque zone frangible comporte au moins une découpe et/ou une prédécoupe.

Avantageusement, chaque zone frangible comporte une pluralité de découpes espacées par des languettes déchirables.

Selon un mode de réalisation, chaque zone frangible s'étend le long d'une partie conçue pour former en partie la structure d'une console centrale.

Selon une possibilité, l'élément de planche de bord est formé par moulage de matière plastique.

Selon une possibilité de la planche de bord, l'élément de planche de bord est masqué par une peau de planche de bord de sorte à rendre invisible par le conducteur chaque zone frangible.

L'invention sera mieux comprise à la lecture de la description détaillée qui va suivre, donnée uniquement à titre d'exemple non limitatif et faite en se référant aux dessins annexés sur lesquels :

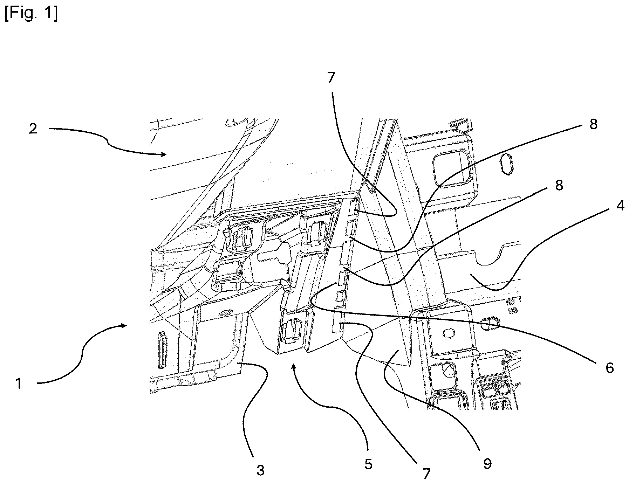

[Fig. 1] la figure 1 représente une vue en perspective d'une portion d'impact d'un élément de planche de bord selon l'invention ;

[Fig. 2] la figure 2 représente une vue de détails de la zone frangible rompue de l'élément de planche de bord de la figure 1 ;

Dans ces figures, les mêmes références sont utilisées pour désigner les mêmes éléments.

Un élément 1 de planche de bord selon l'invention, illustré partiellement sur les figures, est conçu pour être fixé à un véhicule selon l'invention pour former au moins une partie d'une planche de bord 2 du véhicule. L'élément 1 est, par exemple, formé par moulage de matière plastique. Dans l'exemple illustré sur les figures, l'élément 1 de planche de bord est un insert 3 de planche de bord formant une partie de la structure de la planche de bord 2. L'insert 3 est conçu pour être fixé sur au moins une traverse de planche de bord, non illustrée, et pour supporter une peau de planche de bord, également non illustrée. De manière classique, l'insert 3 forme une partie de la structure de la planche de bord 2 située sous le volant du véhicule. L'insert 3 forme également une partie de la structure d'une console centrale 4.

L'élément 1 de planche de bord comportant au moins une portion d'impact 5, illustrée sur les figures, chacune conçue pour être disposée en regard d'un genou d'un conducteur, non illustré, assis en position de conduite dans le véhicule équipé de l'élément 1 de planche de bord. La portion d'impact 5 s'étend, par exemple, sous le volant du véhicule selon l'invention, lorsque l'élément 1 de planche de bord est installé sur le véhicule, en regard du siège du conducteur.

Outre la portion d'impact 5, l'élément 1 de planche de bord comporte au moins une zone frangible 6 conçue pour se rompre et permettre l'enfoncement d'au moins un genou du conducteur dans une portion d'impact 5, lors d'un impact du genou sur la portion d'impact 5, sous l'effet d'un choc subi par le véhicule, notamment un choc avant. Ainsi, en cas de choc avant subi par le véhicule, un impact du ou des genoux du conducteur sur la portion d'impact 5 provoque une rupture de la zone frangible 6, pour permettre l'enfoncement du ou des genoux dans la portion d'impact 5, qui s'efface vers le compartiment moteur du véhicule selon l'invention.

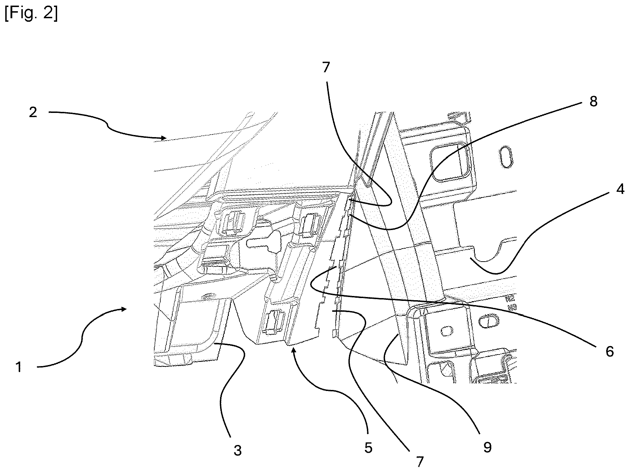

Comme illustré sur les figures, chaque zone frangible 6 comporte au moins une découpe 7 permettant l'initiation d'une rupture de la zone frangible 6 sous l'effet d'un impact sur la portion d'impact 5. Dans l'exemple illustré sur les figures, chaque découpe 7 présente une forme oblongue. En plus ou en remplacement de la ou des découpes 7, la zone frangible 6 comporte avantageusement une prédécoupe de la matière constitutive de l'élément 1 de planche de bord, par exemple obtenue par réduction de matière. Afin de faciliter la rupture de la zone frangible 6, celle-ci comporte avantageusement une pluralité de découpes 7 espacées l'une de l'autre par une languette 8 déchirable. Les dimensions de chaque languette 8, y compris l'épaisseur de matière qui la constitue, et le nombre de languettes 8 permettent de définir un seuil de rupture qui, lorsqu'un impact sur la portion d'impact 5 présente une intensité supérieure au seuil de rupture, provoque une déchirure d'au moins une languette 8, comme illustré sur la figure 2.

Comme illustré sur les figures, une zone frangible 6 s'étend le long d'une partie conçue pour former un panneau 9 de la structure de la console centrale 4.

Enfin, selon une possibilité de la planche de bord 2, l'élément 1 de planche de bord est masqué par une peau de planche de bord, non illustrée, de sorte à rendre invisible par le conducteur chaque zone frangible 6.

Ainsi, l'élément 1 de planche de bord permet de former la planche de bord 2 capable de protéger le conducteur du véhicule contre des blessures infligées aux genoux et/ou aux jambes du conducteur en cas de choc, notamment de choc frontal. En effet, grâce à la zone frangible 6, un impact d'un genou sur la portion d'impact 5, consécutif à un choc subi par le véhicule, provoque une rupture de la zone frangible 6, permettant l'enfoncement du genou dans l'élément 1 de planche de bord, qui s'efface sans blesser le conducteur. Ainsi, l'élément 1 de planche de bord permet de protéger le conducteur en cas de choc subi par le véhicule sans nécessiter de recourir à un coussin gonflable très onéreux.

L'invention ne se limite pas au mode de réalisation de l'élément de planche de bord décrit ci-avant, seulement à titre d'exemple, mais d'autres modes de réalisation peuvent être conçus par l'homme de métier sans sortir du cadre et de la portée de la présente invention.

## Revendications

1. Élément (1) de planche de bord conçu pour être fixé à un véhicule pour former au moins une partie d'une planche de bord (2) du véhicule, l'élément (1) de planche de bord comportant au moins une portion d'impact (5) chacune conçue pour être disposée en regard d'un genou d'un conducteur assis en position de conduite dans le véhicule équipé de l'élément (1) de planche de bord, l'élément (1) de planche de bord comportant au moins une zone frangible (6) conçue pour se rompre et permettre l'enfoncement d'au moins un genou du conducteur dans une portion d'impact (5) lors d'un impact du genou sur la portion d'impact (5) sous l'effet d'un choc subi par le véhicule.

2. Élément (1) de planche de bord selon la revendication 1, **caractérisé en ce que** l'élément (1) de planche de bord est un insert (3) de planche de bord formant en partie la structure de la planche de bord (2).

3. Élément (1) de planche de bord selon la revendication 1 ou 2, **caractérisé en ce que** chaque zone frangible (6) comporte au moins une découpe (7) et/ou une prédécoupe.

4. Élément (1) de planche de bord selon la revendication 3, **caractérisé en ce que** chaque zone frangible (6) comporte une pluralité de découpes (7) espacées par des languettes (8) déchirables.

5. Élément (1) de planche de bord selon l'une des revendications 1 à 4, **caractérisé en ce que** chaque zone frangible (6) s'étend le long d'une partie conçue pour former en partie la structure d'une console centrale (10).

6. Élément (1) de planche de bord selon l'une des revendications 1 à 5, **caractérisé en ce qu'**il est formé par moulage de matière plastique.

7. Planche de bord (2) comportant au moins un élément (1) de planche de bord selon l'une des revendications 1 à 6, conçue pour être installée sur un véhicule de sorte que chaque portion d'impact (5) est disposée en regard d'au moins un genou d'un conducteur du véhicule assis en position de conduite et pour permettre l'enfoncement dans la portion d'impact (5) d'au moins un genou du conducteur, assis en position de conduite du véhicule équipé de la planche de bord (2), par rupture de la zone frangible (6) lors de l'impact d'un genou sur la portion d'impact (5) sous l'effet d'un choc subi par le véhicule.

8. Planche de bord (2) selon la revendication 7, **caractérisée en ce que** l'élément (1) de planche de bord est masqué par une peau de planche de bord de sorte à rendre invisible par le conducteur chaque zone frangible (6).

9. Véhicule automobile comprenant une planche de bord (2) selon la revendication 7 ou 8.
